# EUROPÄISCHE PATENTSCHRIFT

(11) **EP 0 741 113 B1**
(45) Veröffentlichungstag und Bekanntmachung des Hinweises auf die Patenterteilung: **29.08.2001**
(21) Anmeldenummer: 96106647.9
(22) Anmeldetag: 26.04.1996
(51) Int. Cl.: C02F 9/00

(54) **Verfahren zur Beseitigung von Störstoffen aus dem Wasserkreislauf von Papiermaschinen**
Process for eliminating impurities in the circulation water of paper machines
Procédé pour enlever les impuretés dans l'eau de circulation des machines à papier

(30) Priorität: 02.05.1995 DE 19515932
(43) Veröffentlichungstag der Anmeldung: 06.11.1996
(73) Patentinhaber: Zeochem GmbH, 77815 Brühl (DE)
(72) Erfinder: Baumann, Rosenia, 90592 Schwarzenbruck (DE); Heinzel, Günter, 81541 München (DE)
(74) Vertreter: Haft, von Puttkamer, Berngruber, Czybulka

(56) Entgegenhaltungen:
- EP-A- 0 258 546
- EP-A- 0 551 061
- EP-A- 0 671 210

## Beschreibung

Die Erfindung bezieht sich auf ein Verfahren zur Entfernung von Störstoffen aus den Wasserkreisläufen von Papier-, Pappe- oder kartonerzeugenden Betrieben.

Bei der Papierherstellung wird vermehrt Altpapier (bis zu 100%) eingesetzt, welches die Wasserkreisläufe der Papierfabrik zunehmend mit Störstoffen belastet, was zu Ablagerungen im Wasserkreislauf und zu Produktionsschwierigkeiten führt. Durch die zunehmenden Kreislaufschließungen und Temperaturerhöhungen nimmt diese Belastung ständig zu.

Zur Reduzierung dieser Probleme werden dem Wasserkreislauf von Papiermaschinen Störstoffbekämpfungsmittel, wie Alaun, Polyaluminiumchlorid, Natriumaluminat (NaAlO₂), sowie mineralische und synthetische Produkte zugesetzt, die mit den kationischen und anionischen Störstoffen reagieren ("Wochenblatt für Papierfabriken", Nr. 20/94, S. 385/790).

Die Wirkung der bekannten Störstoffbekämpfungsmittel ist jedoch ungenügend. D. h., durch die Störstoffbelastung treten nach wie vor eine Reihe von Schwierigkeiten auf.

So bilden sich Ablagerungen in den Naß- und Trockenpartien der Papiermaschinen, die die Produktivität herabsetzen, ferner die Papierqualität insbesondere im Hinblick auf das Querprofil, Feuchte, Flecke und Abrisse. Auch ist ein erhöhter Dampfverbrauch damit verbunden, desgleichen ein erhöhter Hilfsmittelverbrauch (z.B. Leimungsmittel, Retentionsmittel).

Dieses Problem wird noch dadurch verstärkt, daß durch den Eintrag von Zellstoff, Holzschliff und Altpapier sowie eigenem Ausschuß in vermehrtem Maße Störstoffe, Harze, Stärke, Binder und synthetische Produkte in den Wasserkreislauf gelangen.

Die meisten bekannten Mittel zur Störstoffbekämpfung bewirken nur einen ungenügenden Austrag und/oder Neutralisation von Störstoffen; zugleich beeinträchtigen sie die Qualität des Papiers. Hinzu kommt, daß die verwendeten Füllstoffen die Festigkeitswerte des Papiers beeinträchtigen. Bei Einsatz flüssiger synthetischer Störstoffbekämpfungsmittel wird zwar eine Neutralisation der Störstoffe erzielt, aber nur ein minimaler Austrag über das Papier erreicht. Ein weiteres Problem, das durch eine zu hohe Störstoffbelastung auftritt, sind die schwankenden COBB-Werte, die eine schlechte Leimung, Ausschußproduktion und einen erhöhten Leimungschemikalienverbrauch bedingen. Dies gilt auch für alle eingesetzten kationischen Hilfsmittel. Der COBB-Wert, der ein Maß für die Leimung ist, gibt an, wieviel Wasser ein Papier bzw. Karton auf einer definierten Fläche pro Minute aufnimmt.

Das Prinzip der Massenleimung besteht darin, daß die zugegebenen anionischen Harzleimdispersionen oder Harzseifen mittels Aluminiumsulfat, Polyaluminiumchlorid, Natriumaluminat und/oder kationischen synthetischen Produkten, z. B. mit quaternären Ammoniumverbindungen, geflockt und umgeladen werden, so daß diese auf die anionische Faser aufziehen können. Dieser Effekt kann zum Teil auch durch den Einsatz kationischer Harzleimemulsionen oder synthetischer Leimungsmittel, z. B. AKD-Leimen, erzielt werden, also kationische Leime auf Alkylketendimer-Basis.

Dabei kommt es zu Störungen durch den Einfluß der anionischen Störstoffe, was dazu führt, daß im Endprodukt Schwankungen der COBB-Werte entstehen, zudem führt eine Überdosierung der Leimungshilfsmittel schon in geringer Menge zu starken Schäumen sowie zu klebenden Ablagerungen. Dies hat Produktionsstörungen und erhöhte Kosten zur Folge.

Durch die hohe Störstoffbelastung treten ferner schwankende Retentionswerte auf, d. h. eine unterschiedliche Retention des Faser-/Füllstoffgemischs auf dem Sieb. Dies ist mit Gewichts- und Feuchteschwankungen im Papier verbunden und führt zu einer erhöhten Belastung des Kreislaufs und des Abwassers, insbesondere im Hinblick auf die chemische Sauerstoffbelastung (CSB), die biologische Sauerstoffbelastung (BSB), den Gehalt an adsorbierbaren organischen und halogenierten Kohlenwasserstoffen (AOX) sowie an Feststoffen.

D. h., die hohe Störstoffbelastung führt dazu, daß beim Einsatz der bekannten Retentionsmittel und Systeme keine optimalen Resultate erzielt werden, speziell hinsichtlich Papierdurchsicht, Trockengehalt und Retention.

Darüberhinaus führt die hohe Störstoffbelastung zu einer erhöhten Belastung der Wasserkreisläufe durch Mikroorganismen (Schleimbakterien), die zur Batzenbildung führen, also zu Ablagerungen und Abrissen, welche die Produktion negativ beeinflussen.

Um die Verschleimung und die Bildung von Bakterien zu bekämpfen, wurden bislang Bakterizide bzw. Mikrobiozide dem Kreislaufwasser (Siebwasser/Dickstoffberech) zugesetzt. Diese Mikrobiozide bewirken kurzfristig ein Abtöten der Mikrorganismen, ohne diese aber aus dem Kreislaufwasser zu entfernen. Darüber hinaus sind Biozide meist toxisch reagierende Substanzen und führen, insbesondere bei Überdosierungen, zu Störungen der biologischen Klärstufe der Abwasseranlage. Auch sind Biozide mit extrem hohen Kosten verbunden.

Aus EP 551 061 A1 ist ein Coagulans bekannt, das auch zum Ausflocken der Cellulose-Fasern bei der Papierherstellung verwendet werden kann und durch Auflösen eines Zeoliths in einer Lösung eines Polyaluminiumhydroxychlorids bei Raumtemperatur gebildet wird.

Aufgabe der Erfindung ist es, ein Verfahren bereitzustellen, mit dem die Störstoffe wirkungsvoll beseitigt werden, ohne daß die Papierqualität negativ beeinflußt wird.

Dies wird erfindungsgemäß mit dem im Anspruch 1 gekennzeichneten Verfahren erreicht. In den Unteransprüchen sind vorteilhafte Ausgestaltungen der Erfindung wiedergegeben.

Nach dem erfindungsgemäßen Verfahren wird also dem Wasserkreislauf der Papiermaschine ein Verbundprodukt zugegeben, das durch Umsetzung eines Zumindest teilweise protonisierten Zeoliths mit Polyaluminiumchlorid, das teilweise hydrolysiert ist, unter Wärmeeinwirkung erhalten wird.

Mit diesem Zeolith-Verbundprodukt werden Störstoffe aus dem Wasserkreislauf von Papiermaschinen wirkungsvoll entfernt.

Das erfindungsgemäße Verfahren ist bei den Wasserkreisläufen aller Papiermaschinen im weitesten Sinne anwendbar. D. h., es bezieht sich nicht nur auf die Wasserkreisläufe bei der Papier-, sondern auch bei der Karton- und Pappeherstellung.

Durch die große äußere und innere Oberfläche des Zeolith-Verbundprodukts in Kombination mit der kationischen Ladung werden die anionischen Störstoffe, welche als kolloidal gelöste Teilchen im Wasserkreislauf vorhanden sind, an das Verbundprodukt gebunden. Durch die sehr hohe Eigenretention werden diese an das Verbundprodukt gebundenen Störstoffe mit dem Papier ausgetragen.

Durch die Umsetzung mit dem Polyaluminiumchlorid wird der Zeolith kationisiert.

Durch seine Kationizität wird das Zeolith-Verbundprodukt nicht nur lose in das Cellulose-Fasergefüge des Blattes eingelegt, sondern es entsteht eine Wasserstoffbrückenbildung zur Cellulose-Faser, wodurch erreicht wird, daß das Verbundprodukt fest an die Faser gebunden ist. Durch diesen Effekt wird erreicht, daß das als Füllstoff verwendete Zeolith-Verbundprodukt fest im Fasergebinde eingebettet ist. Beim Verarbeiten von Druckpapieren, Schreib- und Kopierpapieren wird dadurch der Staubungseffekt drastisch reduziert.

Zugleich besitzt das Zeolith-Verbundprodukt eine hohe bakteriostatische Wirkung. Sie dürfte darauf beruhen, daß das Zeolith-Verbundprodukt durch Kontakt mit der Eiweißschale der Mikroorganismen deren Auflösung bewirkt. Jedenfalls wird das Zeolith-Verbundprodukt mit Bakterien beladen. Das mit Bakterien beladene Zeolith-Verbundprodukt retendiert auf dem Sieb und wird somit mit dem Papier nahezu vollständig ausgetragen.

Das Zeolith-Verbundprodukt verbleibt somit nicht im Wasserkreislauf, wodurch dieser entlastet wird, ebenso die nachgeschalteten Klärstufen der Abwasserreinigungsanlage der Papierfabrik.

Neben diesem ökologischen Vorteil wird noch der ökonomische Vorteil erreicht, daß das Verbundprodukt dem Papier gewichtsmäßig zugeführt und damit die Papierherstellungskosten drastisch gesenkt werden.

Die Zugabe des Verbundprodukts erfolgt vorzugsweise kontinuierlich im Dickstoffbereich der Papiermaschine.

Je nach Art der Papierqualität und der entsprechenden Aufbereitungs- und Reinigungsstufen wird das Zeolith-Verbundprodukt vorzugsweise zwischen Polper- und Maschinenbütte, vorzugsweise kontinuierlich, zudosiert. Ist die Stoffaufbereitung in Teilströme aufgeteilt, z. B. über eine Deinking-Anlage, erfolgt die Dosierung in jedem einzelnen Teilstrom. Bei schnellaufenden Produktionsanlagen empfiehlt es sich, ebenfalls mit einer Teilmenge des Zeolith-Verbundproduktes den Siebwasserkreislauf zu behandeln.

Ferner werden beim erfindungsgemäßen Verfahren durch das Verbundprodukt die für die Leimung störenden Substanzen neutralisiert und aus dem System ausgetragen. Dadurch wird erreicht, daß das Problem der COBB-Schwankungen durch Störstoffe eliminiert ist und optimale Leimungsmittelmengen erreicht werden.

Durch die Umsetzung mit Polyaluminiumchlorid sowie gegebenenfalls mit Epichlorhydrin, einem Epichlorhydrin-Derivat oder Dicyandiamid oder durch Ummantelung der Verbundproduktteilchen mit einem kationischen Polymeren besitzt das Zeolith-Verbundprodukt kationische Eigenschaften. Die anionischen Störstoffe werden daher durch das kationisch eingestellte Zeolith-Verbundprodukt fixiert. Auch nach Fixierung der Störstoffe besitzt das Verbundprodukt noch eine schwache kationische Ladung. Auch der mit Störstoffen beladene Zeolith ist daher in der Lage, eine Verbindung mit der anionischen Zellulosefaser einzugehen. Aufgrund dieses Effekts werden mit dem erfindungsgemäßen Verfahren die Störstoffe nicht nur durch ihren Austrag mit dem Papier eliminiert. Vielmehr tritt eine Zeolith-Faserbindung auf, die die Eigenschaften des Papiers verbessert. D. h., das Zeolith-Verbundprodukt besitzt wie Naturzeolith im Gegensatz zu anderen mineralischen Füllstoffen die Eigenschaft, die Reißlänge, Berstfestigkeit, den Durchreißwiderstand usw. zu verbessern (vgl. "Wochenblatt für Papierfabriken", Nr. 07/94, S. 266-271 und Nr. 20/94, S. 797-801).

Mit dem erfindungsgemäßen Zeolith-Verbundprodukt wird eine wesentliche Retentionserhöhung erreicht. Dies hat zur Folge, daß gegenüber den bekannten Systemen die Retentionsmittelmenge beim erfindungsgemäßen Verfahren um bis zu 70 Gew.-% reduziert werden kann.

Beim Einsatz des Zeolith-Verbundprodukts in der Masse, kurz vor dem Stoffauflauf, kann die Retentionswirkung der allgemein bekannten Polyacrylamide und -amine drastisch erhöht werden. Durch die Verbindung von Aluminiumionen und Silikationen durch Zugabe des Zeolith-Verbundprodukts wird eine Mikroflockung hergestellt. Durch diese Mikroflockung wird eine gleichmäßigere Blattbildung erreicht. Dies heißt, das Blatt ist gleichmäßiger, und die Opazität ist besser. Dies führt zu einer qualitativen Verbesserung der Papierqualität.

Durch die durch das Zeolith-Verbundprodukt erreichte Mikroflockung kann die Zugabemenge der herkömmlichen Retentionsmittel zwischen 30 und 70% reduziert werden, bei gleichen Gesamtretentionswerten.

Durch Zugabe des Zeolith-Verbundprodukts in der Masse wird durch die Mikroflockung in Kombination mit der Standardflockung mit Polyacrylamiden eine wesentlich bessere Entwässerung auf dem Sieb erreicht. Unterstützt durch die molekulare Gitterstruktur des Zeolithes wird ebenfalls in der Pressenpartie die Entwässerungsleistung der Pressen gesteigert. Das im Zeolith gespeicherte Wasser wird unter Druck relativ leicht in die Filze abgegeben.

Durch diesen Effet wird der Trockengehalt vor Einlauf Trockenpartie zwischen 0,2 bis 5% gesteigert.

Ein weiterer, überaus wichtiger, ökologisch und ökonomisch wichtiger Effekt des Zeolith-Verbundprodukts beruht darauf, daß eine Mikroflockung injiziert wird. Dadurch wird eine wesentlich höhere Fein- und Füllstoffretention erreicht, welche zu einer Produktionssteigerung und Dampfeinsparung durch schnelle Entwässerung führt. Diese Mikroflockung hat den weiteren Vorteil, daß die Papierdurchsicht und Zweiseitigkeit, wie auch die Glätte des Papiers wesentlich verbessert werden. Durch die Erhöhung der Feinstoffretention in Kombination mit den bekannten Vorteilen des Naturzeolith gibt es keine Festigkeitsverluste im Papier, wie sie bei Erhöhung des Gehalts an Asche oder dgl. Füllstoffen in Papier und bei den bekannten Retentionssystemen auftritt.

Mit dem erfindungsgemäßen Verfahren zur Störstoffbekämpfung wird also zugleich eine Retentionserhöhung, eine Steigerung des Trockengehalts des Papiers vor der Trockung, die Entlastung der Wasserkreisläufe von Feststoffen und eine Reduktion kolloidal gelöster Verunreinigungen sowie eine Reduktion der Mikroorganismen und damit eine Entlastung der Abwasseranlage erreicht. D. h., im Abwasser tritt ein wesentlich geringerer Feststoffanteil und ein wesentlich geringerer Anteil an kolloidalen Stoffen auf. Damit wird eine biologisch/chemisch/physikalische Abwasseranlage vor allem hinsichtlich der CSB-, BSB- und AOX-Werte sowie des Schlammanfalls entlastet.

Der erfindungsgemäß verwendete Zeolith ist vorzugsweise ein Naturzeolith. Dabei kann es sich um ein Gestein mit einem hohen Zeolithgehalt handeln, vorzugsweise einem Zeolithgehalt von mindestens 40 Gew.-%. Als besonders geeignet hat sich ein Gestein erwiesen, bei dem die Zeolithkomponente eine Klinoptilolithstruktur besitzt.

Ferner hat es sich als vorteilhaft erwiesen, wenn das Si/Al-Verhältnis des Zeoliths mehr als 3 beträgt. Ferner sollte der Quarzgehalt des verwendeten Zeolith-Gesteins höchstens 5 Gew.-%, vorzugsweise höchstens 1 Gew.-% betragen.

Die Teilchengröße des zeolithhaltigen Gesteinsmehls sollte 0,1 bis 30 *µ*m betragen.

Das für das erfindungsgemäße Verfahren verwendete Zeolith-Verbundprodukt kann entsprechend der deutschen Patentanmeldung P 44 08 302.5-41 hergestellt werden.

D. h., es wird, ausgehend von einem natürlichen säurefesten, thermostabilen, zeolithhaltigen Gesteinsmehl im ersten Schritt durch Säurebehandlung ein Zwischenprodukt hergestellt, in dem der Zeolith zum Teil oder ganz in H-Form vorliegt. Diese Wasserstoff-Form läßt sich auch durch NH₄-Austausch und anschließende thermische Behandlung erhalten. Dieses Zwischenprodukt wird dann mit teilweise hydrolysiertem Polyaluminiumchlorid homogen vermischt und bei hoher Temperatur zur Reaktion gebracht. Durch diese exogene Behandlung spielt sich eine chemische Reaktion ab, und das teilhydrolysierte Polyaluminiumchlorid wird zum Teil chemisorbiert und zum Teil physisorbiert, je nach Mengenverhältnis. Dadurch entsteht ein hochaktives Verbundprodukt.

Die thermische Behandlung erfolgt zwischen 100 bis 600°C, vorzugsweise bei etwa 300°C. Die zwei Ausgangskomponenten, das zeolithhaltige Gesteinsmehl und das teilhydrolysierte Polyaluminiumchlorid, werden in einem Gewichtsverhältnis von 1:0,01 bis 1:5 angewendet, vorzugsweise liegt das Verhältnis bei etwa 1:1 bis 1:2.

Das erfindungsgemäße Störstoffbekämpfungsmittel wird bevorzugt erhalten, indem ein Gemisch aus zumindest teilweise protonisiertem Zeolith, Polyaluminiumchlorid und Wasser bei einer Temperatur zwischen 150 und 250°C unter Verdampfung des Wassers umgesetzt wird, wobei die Temperatur so gesteuert wird, daß das so gebildete feste Verbundprodukt auf nicht mehr als 100°C erwärmt wird, wenn es eine Feuchtigkeit von weniger als 10, vorzugsweise weniger als 5 Gew.-% erreicht hat.

Wie aus der nachstehenden Gleichung (I) ersichtlich, werden bei der Herstellung des Zeolith-Verbundproduktes die Hydroxylgruppen (OH) der protonisierten Zeolithstruktur (Z) mit den OH-Gruppen des teilweise hydrolysierten Polyaluminiumchlorids zu einer Verbindung
(Z-O)ₙAlₙ(OH)ₙ₋ₘ(Cl)ₘ, worin m > 0 ist, umgesetzt.

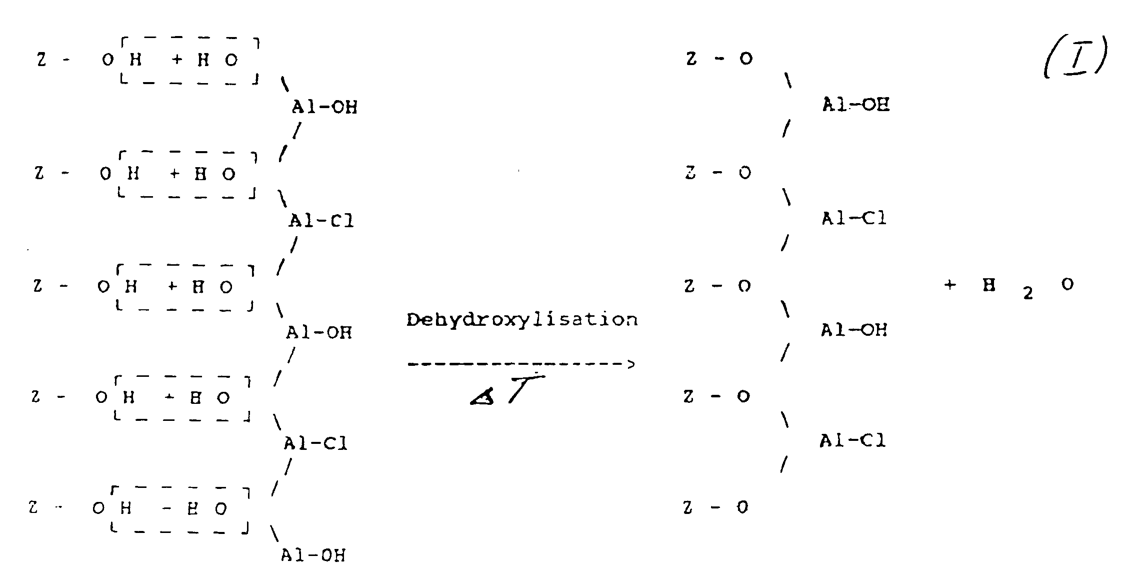

Im Falle von Klinoptilolith wird der protonische Zeolith durch die Formel Hₙ(Na)₆₋ₙ[Al₆Si₃₀O₇₂] mit n > 1 wiedergegeben.

Durch die Umsetzung mit Polyaluminiumchlorid wird der Zeolith kationisiert. Die Kationisierung wird jedoch zweckmäßigerweise nicht ausschließlich mit Polyaluminiumchlorid durchgeführt.

Um die Wirkung zu optimieren und die Kationizität des Zeolith zu erhöhen, hat es sich als vorteilhaft herausgestellt, den Zeolith zusätzlich mit Epichlorhydrin, einem Epichlorhydrin-Derivat und/oder Dicyandiamid umzusetzen. Das Epichlorhydrin oder dessen Derivate können dabei auch in polymerisierter Form vorliegen. Epichlorhydrin-Derivate sind polymerisierte Epichlorhydrine, welche unter Zugabe von Säuren, wie z.B. Melaminsäuren, verstärkt wurden.

Um die für die Retention notwendige Flockenbildung zu erzielen, können auf die Verbundproduktteilchen aus einer Flüssigkeit Polymere aufgetragen werden, um die Verbundproduktteilchen zu ummanteln (coating), die dann anschließend getrocknet werden. Als kationische Polymere können beispielsweise Polyacrylamide verwendet werden.

Es können auch Gemische dieser Zeolith-Verbundprodukte verwendet werden, also Gemische aus einem ersten Verbundprodukt, das durch Umsetzung des Zeolithen mit Polyaluminiumchlorid erhalten worden ist, einem zweiten Verbundprodukt, das durch Umsetzung von Zeolith mit Polyaluminiumchlorid und Dicyandiamid erhalten worden ist, ein drittes Verbundprodukt, das durch Umsetzung von Zeolith mit Polyaluminiumchlorid und Epichlorhydrin erhalten worden ist, und/oder einem vierten Verbundprodukt aus mit Polyaluminiumchlorid umgesetzten Zeolithteilchen, die mit einem kationischen Polymeren ummantelt worden sind. Damit können die vorstehend geschilderten Probleme, also insbesondere die klebenden Ablagerungen, schwankende COBB-Werte, schwankende Retentionswerte und die Belastung durch Mikroorganismen gezielt angegangen werden.

Die nachstehenden Beispiele dienen der weiteren Erläuterung der Erfindung.

### Beispiel 1

Zeolithhaltiges Gestein mit ca. 60 Gew.-% Klinoptilolit mit einer Korngröße von höchstens 250 *µ*m wird im Gewichtsverhältnis von ca. 1:1 mit einer ca. 50%-igen wäßrigen Polyaluminiumchloridlösung vermischt. Anschließend wird Salzsäure zugegeben, bis der pH-Wert weniger als 1,5 beträgt. Das Gemisch wird einem Sprühturm mit einer Höhe von ca. 20 m zugeführt und mit einer schnellrotierenden Verteilerscheibe zerstäubt. Im Gleichstrom mit dem Gemisch wird in den Turm von oben Luft mit einer Temperatur von 150 bis 250°C eingeblasen. Das aus dem Turm austretende feste Verbundprodukt weist ene Temperatur von 80 bis 90°C auf. Der Wassergehalt des Produkts beträgt ca. 2 bis 5 Gew.-%.

### Beispiel 2

1 - 3 Gew.-% des Zeolith-Verbundprodukts nach dem Beispiel 1 wurden einem Papierstoff-Brei mit einer Papierstoff-Konzentration von 1 Gew.-% zugesetzt. Das Gemisch wurde bei Raumtemperatur ca. 30 min gerührt und anschließend über ein Papierfilter abgesaugt. Das Filtrat wurde auf den isoneutralen Punkt titriert. Es zeigte sich, daß die Störstoffe auf das Verbundprodukt aufziehen und somit mit der Faser ausgetragen werden.

## Patentansprüche

1. Verfahren zur Beseitigung von anionischen Störstoffen aus dem Wasserkreislauf von Papiermaschinen, **dadurch gekennzeichnet**, dass dem Wasserkreislauf ein Zeolith-Verbundprodukt zugegeben wird, das durch Umsetzung eines Zumindest teilweise protonisierten Zeoliths mit einem Zumindest teilweise hydrolysierten Polyaluminiumchlorid bei einer Temperatur zwischen 100 und 600°C erhalten wird.

2. Verfahren nach Anspruch 1, **dadurch gekennzeichnet**, dass der Zeolith ein Naturzeolith ist.

3. Verfahren nach Anspruch 1 oder 2, **dadurch gekennzeichnet**, dass der Zeolith einen Quarzgehalt von höchstens 5 Gew.-% aufweist.

4. Verfahren nach einem der vorstehenden Ansprüche, **dadurch gekennzeichnet**, dass das Si/Al-Verhältnis des Zeoliths mehr als 3 beträgt.

5. Verfahren nach Anspruch 1, **dadurch gekennzeichnet**, dass der Zeolith eine Klinoptilolithstruktur besitzt.

6. Verfahren nach einem der vorstehenden Ansprüche, **dadurch gekennzeichnet**, dass die Teilchengröße des Zeoliths 0,1 bis 30 µm beträgt.

7. Verfahren nach einem der vorstehenden Ansprüche, **dadurch gekennzeichnet**, dass ein Gemisch aus zumindest teilweise protonisiertem Zeolith, teilweise hydrolysiertem Polyaluminiumchlorid und Wasser bei einer Temperatur zwischen 150 und 250°C unter Verdampfung des Wassers umgesetzt wird, wobei die Temperatur so gesteuert wird, dass das gebildete feste Zeolith-Verbundprodukt, sobald es eine Feuchtigkeit von weniger als 10 Gew.-% erreicht hat, auf nicht mehr als 100°C erwärmt wird.

8. Verfahren nach einem der vorstehenden Ansprüche, **dadurch gekennzeichnet**, dass das Zeolith-Verbundprodukt mit Epichlorhydrin, einem Epichlorhydrin-Derivat und/oder Dicyandiamid umgesetzt wird.

9. Verfahren nach Anspruch 8, **dadurch gekennzeichnet**, dass das Gewichtsverhältnis des Zeolith-Verbundprodukts zu dem Epichlorhydrin, Epichlorhydrin-Derivat und/oder Dicyandiamid 1:0,01 bis 1:3 beträgt.

10. Verfahren nach einem der vorstehenden Ansprüche, **dadurch gekennzeichnet**, dass die Zeolith-Verbundprodukt-Teilchen mit einem kationisierten Polymeren ummantelt werden.

11. Verfahren nach Anspruch 10, **dadurch gekennzeichnet**, dass als kationisiertes Polymeres Polyacrylamid verwendet wird.

## Claims

1. A process for the removal of harmful anionic substances from the water circulation of paper machines,
**characterised in that** added to the water circulation is a zeolite composite product, which is obtained by reacting an at least partially protonised zeolite with an at least partially hydrolysed polyaluminium chloride at a temperature of between 100 and 600°C.

2. A process according to Claim 1,
**characterised in that** the zeolite is a naturally occurring zeolite.

3. A process according to Claim 1 or 2,
**characterised in that** the zeolite has a maximum quartz content of 5 % by weight.

4. A process according to one of the preceding Claims,
**characterised in that** the Si/Al ratio of the zeolite is more than 3.

5. A process according to Claim 1,
**characterised in that** the zeolite possesses a clinoptilolite structure.

6. A process according to one of the preceding Claims,
**characterised in that** the particle size of the zeolite is 0.1 to 30 µm.

7. A process according to one of the preceding Claims,
**characterised in that** a mixture of at least partially protonised zeolite, partially hydrolysed polyaluminium chloride and water is reacted at a temperature of between 150 and 250°C by evaporation of the water, whereby the temperature is controlled so that the formed solid zeolite composite product is heated to not more than 100°C as soon as it has reached a moisture of less that 10 % by wt..

8. A process according to one of the preceding Claims,
**characterised in that** the zeolite composite product is reacted with epichlorhydrine, an epichlorhydrine derivative and/or dicyandiamide.

9. A process according to Claim 8,
**characterised in that** the weight ratio of the zeolite composite product to the epichlorhydrine, epichlorhydrine derivate and/or dicyandiamide is 1:0.01 to 1:3.

10. A process according to one of the preceding Claims,
**characterised in that** the zeolite composite product particles are encased with a cationised polymer.

11. A process according to Claim 10,
**characterised in that** polyacrylamide is used as cationised polymer.

## Revendications

1. Procédé pour éliminer des composés indésirables anioniques de la circulation d'eau de machines à papier, **caractérisé** par le fait que l'on introduit dans la circulation d'eau un produit composite à base de zéolithe obtenu par réaction d'une zéolithe au moins partiellement protonée avec un poly(chlorure d'aluminium) au moins partiellement hydrolysé à une température allant de 100 à 600 °C.

2. Procédé selon la revendication 1, **caractérisé** par le fait que la zéolithe est une zéolithe d'origine naturelle.

3. Procédé selon la revendication 1 ou 2, **caractérisé** par le fait que la zéolithe a une teneur en quartz au plus égale à 5 % en poids.

4. Procédé selon une des revendications précédentes, **caractérisé** par le fait que le rapport Si/Al de la zéolithe est supérieur à 3.

5. Procédé selon la revendication 1, **caractérisé** par le fait que la zéolithe a une structure clinoptilolithique.

6. Procédé selon une des revendications précédentes, **caractérisé** par le fait que la taille des particules de la zéolithe est comprise entre 0,1 et 30 µm.

7. Procédé selon une des revendications précédentes, **caractérisé** par le fait que l'on fait réagir un mélange contenant une zéolithe au moins partiellement protonée, du poly(chlorure d'aluminium) au moins partiellement hydrolysé et de l'eau à une température allant de 150 °C à 250 °C en évaporant l'eau, la température étant contrôlée d'une manière telle que le produit composite solide à base de zéolithe obtenu, dès qu'il a atteint une teneur en eau inférieure à 10 % en poids, est chauffé au plus à 100 °C.

8. Procédé selon une des revendications précédentes, **caractérisé** par le fait que l'on fait réagir le produit composite à base de zéolithe avec de l'épichlorhydrine, un dérivé d'épichlorhydrine et/ou du dicyanodiamide.

9. Procédé selon la revendication 8, **caractérisé** par le fait que le rapport en poids du produit composite à base de zéolithe à l'épichlorhydrine, au dérivé d'épichlorhydrine et/ou au dicyanodiamide est compris entre 1:0,01 et 1:3.

10. Procédé selon une des revendications précédentes, **caractérisé** par le fait que les particules composites à base de zéolithe sont enrobées avec un polymère cationique.

11. Procédé selon la revendication 10, **caractérisé** par le fait que l'on utilise en tant que polymère cationique du polyacrylamide.
